# EUROPÄISCHE PATENTANMELDUNG

(11) **EP 4 831 141 A1**
(43) Veröffentlichungstag der Anmeldung: **28.10.2026**
(21) Anmeldenummer: 25172301.1
(22) Anmeldetag: 24.04.2025
(51) Int. Cl.: C04B 18/02, C04B 28/14, C04B 28/02

(54) **VERFAHREN ZUR HERSTELLUNG EINES BLOCKSTEINS, PULVER FÜR EIN VERFAHREN ZUR HERSTELLUNG EINES BLOCKSTEINS UND EIN VERFAHREN ZUR HERSTELLUNG EINES SOLCHEN PULVERS**

(71) Anmelder: Schlimme, Hans-Jürgen, 38165 Lehre (DE); Srour, Matthias, 70327 Stuttgart (DE)
(72) Erfinder: Schlimme, Hans-Jürgen, 38165 Lehre (DE); Srour, Matthias, 70327 Stuttgart (DE)
(74) Vertreter: Gramm, Lins & Partner Patent- und Rechtsanwälte PartGmbB

(57) **Zusammenfassung**

Die Erfindung betrifft ein Verfahren zur Herstellung eines Blocksteins (1) aus einem Gemisch (10), wobei das Gemisch (10) einen ersten Stoff aus einem ersten Material und ein Pulver aus einem zweiten Material aufweist, wobei das Pulver wenigstens einen Partikel (20) aufweist, der eine Blase (22) umschließt.

## Beschreibung

Die Erfindung betrifft ein Verfahren zur Herstellung eines Blocksteins aus einem Gemisch, wobei das Gemisch einen ersten Stoff aus einem ersten Material und ein Pulver aus einem zweiten Material aufweist, ein Pulver für ein Verfahren zur Herstellung eines Blocksteins und ein Verfahren zur Herstellung eines solchen Pulvers.

Die Verwendung von Füllstoffen in verschiedenen Industrien, wie der Bau-, Verpackungs- und Automobilindustrie, ist weit verbreitet. Herkömmliche Materialien und Verfahren zur Herstellung von leichten, hochfesten und langlebigen Produkten stoßen jedoch auf zahlreiche technische und ökologische Herausforderungen.

Leichte Baumaterialien wie Schaumzement enthalten große Luftblasen, die das Material leichter machen, aber die mechanische Festigkeit verringern. Die ungleichmäßige Verteilung der Luftblasen führt zu Lastkonzentrationen, die die Stabilität und Haltbarkeit des Materials einschränken. Für die Herstellung von hochfesten leichten Betonprodukten ist eine Wärmebehandlung erforderlich. Diese Verfahren verbrauchen große Mengen an Energie und erhöhen die CO₂-Emissionen erheblich.

Eine globale Herausforderung ist die Entwicklung nachhaltiger und vielseitig einsetzbarer Materialien, die umweltschonend produziert werden können. Kunststoffe und Polymere, die traditionell als Füllstoffe in zahlreichen Industrien eingesetzt werden, verursachen durch ihren Einsatz erhebliche ökologische Probleme, darunter Mikroplastikbelastung und hohe CO₂-Emissionen.

Mit der Entwicklung eines blasigen Pulvers aus beispielsweise Bio-Zement oder recyceltem Zement wird eine innovative Lösung vorgestellt. Dieses Pulver ersetzt herkömmliche Polymer-Füllstoffe und bietet dabei gleichzeitige Vorteile wie hohe Festigkeit, Leichtigkeit, verbesserte Wärmedämmung und Wasserdichtigkeit. Die Anwendungsmöglichkeiten reichen von Baumaterialien über Verpackungen bis hin zu Leichtbau- und Automobilanwendungen. Durch die Wiederverwertung von Zementmaterialien trägt die Erfindung zudem aktiv zur Ressourcenschonung und einer Kreislaufwirtschaft bei.

Mit dieser neuen Technologie wird ein entscheidender Schritt in Richtung umweltfreundlicher und nachhaltiger Produktionsmethoden gemacht, der verschiedene Branchen und Industrien revolutionieren könnte.

Aufgabe der vorliegenden Erfindung ist es ein verbessertes Verfahren zur Herstellung eines Blocksteins aus einem Gemisch, ein verbessertes Pulver für ein Verfahren zur Herstellung eines Blocksteins, sowie ein verbessertes Verfahren zur Herstellung eines solchen Pulvers.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Ein erster Aspekt betrifft ein Verfahren zur Herstellung eines Blocksteins aus einem Gemisch, wobei das Gemisch einen ersten Stoff aus einem ersten Material und ein Pulver aus einem zweiten Material aufweist, dadurch gekennzeichnet, dass das Pulver wenigstens einen Partikel aufweist, der eine Blase umschließt.

Mit anderen Worten betrifft die Erfindung ein Verfahren zur Herstellung eines Blocksteins, insbesondere eines Leichtbausteins. Unter einem Leichtbaustein ist ein Stein zu verstehen, welcher Hohlräume aufweist. Insbesondere ist ein solcher Stein poröse. Das heißt, dass der Leichtbaustein Poren aufweist. Durch die Poren bzw. Hohlräume weist ein Leichtbaustein eine besonders geringe Dichte auf. Insbesondere ist ein solcher Leichtbaustein leichter als ein konventioneller Stein. Vorzugsweise wird der Blockstein aus dem Gemisch hergestellt. Beispielsweise weist der Blockstein zusätzlich zu dem Gemisch weitere Bestandteile, wie beispielsweise Sand, Kalk und/oder Wasser auf. Alternativ weist das Gemisch weitere Bestandteile, wie beispielsweise Sand, Kalk und/oder Wasser auf. Insbesondere kann das Gemisch weitere Bestandteile wie beispielsweise Sand und/oder Kalk aufweisen und zur Herstellung des Blocksteins dem Gemisch Wasser beigefügt werden.

Vorzugsweise weist das Gemisch den ersten Stoff und das Pulver auf. Vorzugsweise ist der erste Stoff und das Pulver vermischt. Beispielsweise ist das Pulver in dem Gemisch mit einem geringeren Gewichtsanteil als der erste Stoff in dem Gemisch enthalten. Insbesondere ist der erste Stoff so ausgewählt, dass dieser beim Herstellen des Blocksteins das Pulver bindet. Mit anderen Worten kann der erste Stoff ein Bindemittel sein. Das Pulver weist beispielsweise Zement auf. Insbesondere kann das Pulver durch ein weiter unter beschriebenes Verfahren gewonnen werden. Beispielsweise wird der Zement mittels Wasser angerührt, aufgeschäumt, getrocknet und zermahlen. Durch das Anrühren des Zements mit Wasser findet eine Hybridisierung statt. Das heißt, dass der Zement mit dem Wasser reagiert. Folglich reagiert Zement beim erneuten Kontakt mit Wasser nur noch geringfügig. Dies bedeutet für die Herstellung eines Blocksteins, dass durch erneutes Anrühren des Pulvers mit Wasser eine solche Reaktion nicht mehr stattfindet bzw. nur geringfügig stattfindet. Folglich kann es erforderlich sein, dem Pulver ein Bindematerial, wie beispielsweise den ersten Stoff beizufügen. Folglich kann bei Kontakt mit Wasser der erste Stoff reagieren und Partikel des Pulvers binden.

Vorteilhafterweise weist der so gebundene Partikel eine Blase auf. Hierdurch hat der Partikel ein besonders geringes Gewicht. Insbesondere ist das Gewicht des Partikels geringer als ein vergleichbarer Partikel aus demselben Material, welches keine Blase aufweist.

Weist das Pulver mehrere solcher Partikel mit Blasen auf, hat das Gemisch, insbesondere vor einem Kontakt mit Wasser bzw. vor dem Anrühren, ein besonders geringes Gewicht. Vorteilhafterweise reagiert im Wesentlichen nur der erste Stoff bei Kontakt mit Wasser, sodass das Pulver durch den ersten Stoff gebunden wird. Vorzugsweise reagieren die Partikel des Pulvers beim Anrühren so wenig, dass die Blase im Partikel erhalten bleibt.

Beispielsweise ist der erste Stoff ein Harz, insbesondere ein Einkomponentenharz oder ein Zweikomponentenharz. Folglich kann ein Anrühren des Gemisches auch ohne Wasser erfolgen. Beispielsweise kann das Gemisch Harz eines Zweikomponentenharzes und das Pulver aufweisen, sodass ein Einmischen durch die Zugabe eines Härters des Zweikomponentenharzes erfolgt. In diesem Beispiel findet keine bzw. im Wesentlichen keine Reaktion des Pulvers mit dem Harz statt. Hingegen reagiert lediglich das Harz mit dem Härter, sodass die Partikel des Pulvers gebunden werden. Unter der Aussage, dass die Partikel des Pulvers nicht reagieren bzw. im Wesentlichen keine Reaktion des Pulvers stattfindet, ist gemeint, dass die Partikel einen Ausgangszustand insoweit erhalten, dass durch den Partikel weiterhin die Blase umschlossen ist.

Weiter umschließt der Partikel die Blasen. Dies hat den Vorteil, dass bei Kontakt mit Wasser ein Eindringen des Wassers in den Partikel, insbesondere in die Blase des Partikels verhindert wird. Vorzugsweise weist der Partikel eine Luftblase auf. Eine solche Luftblase kann in den Partikel beim Anrühren eines Ausgangsstoffes mit Wasser und anschließendem Aufschäumen eingeschlossen werden. Beispielsweise weist die Blase ein Gas auf. Beispielsweise kann zum Aufschäumen ein Gas, wie beispielsweise ein nicht brennbares Gas, ein Schutzgas, insbesondere Stickstoff, verwendet werden. In diesem Beispiel weist die Blase zumindest zu einem Teil ein von Sauerstoff bzw. von einem Luftgemisch verschiedenes Gas auf. Dies hat den Vorteil, dass weitere Eigenschaften des Blocksteins, wie beispielsweise die Brennbarkeit, eingestellt werden können.

Beispielsweise weist das Gemisch 0,6 Teile Zement als ersten Stoff und 0,03 Teile Pulver und 0,36 Teile Sand auf, welche mit einer entsprechenden Menge Wasser angemischt werden, sodass daraus der Blockstein herstellbar ist.

Gemäß einer Ausführungsform weist das erste Material und/oder das zweite Material Calcium auf.

Mit anderen Worten kann das erste Material von dem zweiten Material verschieden sein. Alternativ kann das erste Material dem zweiten Material entsprechen. Beispielsweise ist das erste Material Gips, welche aus Calcium hergestellt wird, und das zweite Material Zement. Vorzugsweise ist das erste Material Zement und das zweite Material Zement. Insbesondere ist darunter, dass das erste Material und/oder zweite Material Calcium aufweist, eine calciumhaltige Verbindung, insbesondere chemische Verbindung, gemeint.

Die Verwendung von Calcium hat den Vorteil, dass das erste und/oder zweite Material eine besonders hohe Festigkeit aufweist. Insbesondere können calciumhaltige Stoffe als Bindemittel verwendet werden.

Gemäß einer weiteren Ausführungsform ist das erste Material und/oder das zweite Material Zement oder Gips.

Unter Zement ist im Sinne dieser Anmeldung, wenn nicht anders angegeben, Zementpulver gemeint, welches als Ausgangsmaterial zur Herstellung von Zement, insbesondere mit Wasser, verwendet wird. Wird dahingegen von Pulver gesprochen, welches Zement, insbesondere Zement mit Blasen, aufweist, ist das Pulver gemeint, welches durch das entsprechende Verfahren zur Herstellung des Pulvers erhalten wurde.

Die Verwendung von Zement hat den Vorteil, dass Bio-Zement und/oder recycelter Zement verwendet werden kann. Insbesondere können Rohstoffe wie Kalkstein, Ton, Gipsstein, Eisenoxyd, Sand und Schluff, wiederverwendet werden. Durch die Verwendung von Zement kann eine besonders hohe Festigkeit erzielt werden.

Die Verwendung von Gips hat den Vorteil, dass ein besonders umweltfreundliches Material verwendet wird, wie beispielsweise Naturgips.

Durch eine geeignete Kombination der Materialien in dem Gemisch können die vorteilhaften Eigenschaften beider oben genannter Materialen kombiniert werden.

Weist das Gemisch als erstes Material Zement und als zweites Material Zement auf, so kann der Blockstein eine besonders hohe Festigkeit aufweisen. Beispielsweise kann ein solcher Blockstein eine Druckbelastung von bis zu 15 MPa, insbesondere 13 MPa, vorzugweise 10 MPa, aufweisen.

Bei der Verwendung von Gips als erstes Material, wobei das erste Material im Gemisch mit einem höheren Gewichtsanteil als das zweite Material vorliegt, kann ein besonders umweltfreundlicher Blockstein erhalten werden.

Vorteilhafterweise können durch die Verwendung von unterschiedlichen ersten und zweiten Materialen, insbesondere Zement und/oder Gips, die Eigenschaften des Blocksteins, insbesondere hinsichtlich der Festigkeit und Umweltverträglichkeit, eingestellt werden, sodass der Blockstein an die Anforderungen anpassbar ist.

In einer weiteren Ausführungsform entspricht das erste Material dem zweiten Material.

Dies hat den Vorteil, dass der Partikel mit der Blase, welcher aus dem zweiten Material ist, besonders gut in das erste Material eingebunden wird.

In einer weiteren Ausführungsform ist das erste Material von dem zweiten Material verschieden.

Dies hat den Vorteil, dass vorteilhafte Eigenschaften unterschiedlicher Materialen kombiniert werden können, sodass der Blockstein besonders gut an die Anforderungen angepasst werden kann.

Gemäß einer weiteren Ausführungsform weist das Gemisch eine Dichte auf, die geringer als eine Dichte des ersten Stoffes ist.

Vorzugsweise wird durch eine Hinzugabe des zweiten Stoffes die Dichte des Gemisches reduziert. Hiermit ist insbesondere gemeint, dass durch Hinzugabe von dem Pulver, aufweisend Partikel mit Blasen, die Dichte reduziert werde kann. Beispielsweise ist der erste Stoff des Gemisches Zement. In diesem Fall kann durch Hinzugabe des Pulvers, insbesondere auf Zement, mit Blasen die Dichte des Gemisches reduziert werden, da die Dichte von Zement höher als die Dichte von dem Pulver aus Zement mit Blasen ist.

Gemäß einer Ausführungsform umschließen mehrere Partikel, insbesondere eine Mehrheit der Partikel, jeweils eine Blase.

Vorzugsweise ist vorgesehen, dass mehr als ein einziger Partikel des Pulvers eine Blase aufweist. Insbesondere ist vorgesehen, dass mehrere Partikel jeweils eine Blase aufweisen. Beispielsweise weist ein Partikel mehrere Blasen auf. Vorteilhafterweise weisen jedoch mehrere Partikel jeweils eine Blase auf. Besonders vorzugsweise weist die Mehrheit der Partikel jeweils mindestens eine Blase auf. Beispielsweise weist jeder Partikel eine Blase, insbesondere genau eine Blase, auf. Vorteilhafterweise weisen die Partikel Blasen auf, welche in etwa eine gleiche Größe haben. Beispielsweise haben die Blasen eine Größenabweichung zueinander von bis zu 50%, insbesondere von bis zu 40%, vorteilhafterweise von bis 20%, besonders vorteilhafterweise von 5%, wobei die Größenabweichung basierend auf einem Volumen der Blase zu bestimmen ist.

Durch eine besonderes geringe Größenabweichung der Blasen, kann eine besonders gleichmäßige Kraftverteilung in dem Blockstein erreicht werden, welches die Festigkeit des Blocksteins weiter verbessert.

Gemäß einer Ausführungsform sind die Blasen homogen im Blockstein verteilt.

Unter "homogen verteilt" ist insbesondere zu verstehen, dass die Blasen in etwa die gleiche Größenverteilung aufweisen. Vorzugsweise sind die Blasen auch gleichmäßig über ein Volumen des Blocksteins verteilt. Beispielsweise weisen die Blasen zueinander denselben Abstand auf. Beispielsweise weist das Gemisch zu 1/3 das Pulver und zu 2/3 den ersten Stoff auf, so kann beispielsweise jeder dritte Partikel eine Blase aufweisen. Vorzugsweise beträgt der Abstand in diesem Beispiel den Durchmesser von zwei Partikeln. Durch die Zugabe weiterer Stoffe kann sich der Abstand zwischen den Blasen weiter vergrößern.

Durch eine homogene Verteilung der Blasen im Blockstein, kann eine besonders gleichmäßige Kraftverteilung in dem Blockstein erreicht werden, welches die Festigkeit des Blocksteins weiter verbessert.

Ein weiterer Aspekt betrifft ein Pulver für ein Verfahren zur Herstellung eines Blocksteins gemäß einem der vorherigen Ausführungsformen, wobei die Partikel eine Korngröße von mindestens 20 µm, insbesondere mindestens 30 µm, vorzugsweise mindestens 40 µm und/oder höchstens 70 µm, insbesondere höchsten 60 µm, vorzugsweise höchsten 50 µm aufweisen.

Das Pulver kann beispielsweise durch ein Verfahren zur Herstellung eines Pulvers gewonnen werden. Das erhaltene Pulver zeichnet sich insbesondere dadurch aus, dass es eine gleichmäßige Korngröße aufweist. Die Korngröße entspricht insbesondere einer Korngrößenverteilung. Die Korngrößenverteilung kann einer Gaußverteilung entsprechen. Beispielsweise weist das Pulver Partikel auf, welche eine Größe haben, welche innerhalb von 1σ, insbesondere 2σ, vorzugsweise 4σ, um die vorgegebene Korngröße liegen.

Durch das Einstellen der Korngröße kann beim Zermahlen die Größe der Blase eingestellt werden. Bei einer kleineren Korngröße werden zumindest alle Blasen aufgebrochen, welche eine Größe aufweisen, die größer als die Korngröße ist.

Beispielsweise weist Zementpulver als Ausgangsmaterial eine Korngröße von 10 µm auf. Das erhaltene Pulver weist nach dem Zermahlen eine Korngröße von mindestens 20 µm auf. So kann eine Vergrößerung der Korngröße der in dem Partikel enthaltenden Blase entsprechen. Insbesondere meint die Korngröße, dass eine Mehrheit der Partikel in dem Pulver die entsprechende Korngröße aufweisen.

In Abhängigkeit der Korngröße kann in einem mittels des Pulvers hergestellten Blockstein eine Dichte eingestellt werden, welche sowohl von dem Gewichtsanteil des Pulvers in dem Gemisch als auch von der Korngröße abhängt. Insbesondere weist der Stein bei einer geringeren Dichte eine geringere Festigkeit und bei einer höheren Dichte eine höhere Festigkeit auf. Vorzugsweise liegt die Druckfestigkeit von einem solchen Blockstein, mit beispielsweise 15 MPa, oberhalb der Druckfestigkeit von Porensteinen, mit beispielsweise 6 MPa.

Durch eine Steuerung einer Feinheit des Pulvers können dessen Volumen und Struktur gezielt auf verschiedene Anwendungsbereiche abgestimmt werden. Diese Anpassungsfähigkeit macht das Pulver zu einem universellen Füllstoff für unterschiedliche Branchen und Einsatzmöglichkeiten. Die Optimierung der Pulverfeinheit und -struktur erfolgt durch Variation der Zerkleinerungsprozesse und der Verarbeitungstechniken. Unter der Feinheit ist insbesondere eine Körnung zu verstehen.

Beispielsweise ist das Pulver zur Herstellung von Baumaterialien, wie beispielsweise leichter Beton, leichte Betonblöcke, Gipsmischungen und fließfähigem Beton geeignet.

Leichter Beton wird zur Herstellung von leichten, hochfesten und wasserdichten Betonprodukten verwendet. Dies hat den Vorteil eines reduzierten Gewichts bei gleichzeitiger Erhöhung der Druckfestigkeit, verbesserte Wärmedämmung für energieeffiziente Gebäude und einer längeren Haltbarkeit durch reduzierte Wasseraufnahme.

Beispielsweise ist das Pulver zur Herstellung von Schallschutzplatten verwendbar. Schallschutzplatten dienen zur akustischen Isolierung in Gebäuden und Fahrzeugen, thermische Isolierungen, wie beispielsweise für energieeffiziente Gebäudekonstruktionen und/oder Leichtgewicht-Komposite in tragenden Strukturen und funktionalen Komponenten.

Beispielsweise kann das Pulver zur Herstellung von Gipsmischungen, wie insbesondere zur Produktion von leichten Dekorationselementen wie Deckenplatten oder Stuck. Dabei hat die Verwendung des Pulvers den Vorteil einer einfacheren Installation durch geringeres Gewicht und einer hohen Stabilität trotz geringer Materialdichte.

Beispielsweise kann das Pulver auch zur Herstellung von thermischen Isolierungen, insbesondere für Materialien für thermische Dämmung in Gebäuden und Fahrzeugen, verwendet werden. Dabei hat die Verwendung des Pulvers die Vorteile einer hohe Energieeffizienz durch reduzierte Wärmeleitung und einer erhöhten Langlebigkeit in feuchten Umgebungen durch Wasserdichtigkeit.

Beispielsweise kann das Pulver zur Herstellung von Verbundwerkstoffen, wie insbesondere zur Herstellung von leichten und stabilen Bauteilen im Leichtbau, verwendet werden. Dabei hat die Verwendung des Pulvers den Vorteil einer Reduktion des Gewichts bei gleichzeitiger Erhöhung der Belastbarkeit und einer hohen thermischen und akustischen Isolierungseigenschaft.

Beispielsweise kann das Pulver zur Herstellung von Verpackungsmaterialen, wie insbesondere zur Herstellung von Verpackungsmaterialien mit geringem Gewicht und hohem Volumen, verwendet werden. Dabei hat die Verwendung des Pulvers den Vorteil einer Vermeidung von Mikroplastik und fossilen Rohstoffen, einer Umweltfreundlichkeit durch recycelte Materialien, einer anpassbaren Dichte und Struktur für spezifische Verpackungsanforderungen.

Beispielsweise kann das Pulver für Anwendungen in der Automobilindustrie, wie insbesondere zur Herstellung von leichten Füllstoffen für Karosserien, Innenverkleidungen und thermische Isolierungen, geeignet sein. Dabei hat die Verwendung des Pulvers den Vorteil eines reduzierten Kraftstoffverbrauchs durch geringeres Fahrzeuggewicht sowie verbesserte thermische und akustische Eigenschaften.

Das Pulver weist beispielsweise eine hohe Druckfestigkeit durch gleichmäßige Lastverteilung, ein reduziertes Gewicht ohne Beeinträchtigung der Materialstabilität, hervorragende Wärmedämmeigenschaften durch seine Struktur, Wasserdichtigkeit und erhöhte Langlebigkeit der Endprodukte und/oder Feuerfeste bis 1200 Grad Celsius auf

Durch die Herstellung aus recyceltem Zement wird nicht nur der Verbrauch fossiler Rohstoffe minimiert, sondern auch die Wiederverwendung von Baumaterialien gefördert. Dieses Pulver bietet eine wegweisende Lösung, um technische, wirtschaftliche und ökologische Herausforderungen in verschiedenen Industriezweigen zu adressieren.

Darüber hinaus hat das Pulver den Vorteil, dass eine Umweltbelastung durch Verzicht auf Kunststoff- und Polymer-Füllstoffe, die fossile Rohstoffe verwenden und Mikroplastik verursachen, reduziert wird und eine Wiederverwendung von Baumaterialien wie recyceltem Zement, um Abfälle zu minimieren und Primärressourcen zu schonen, ermöglicht wird. Weiter führt das erfindungsgemäße Pulver zu einer Reduktion von CO₂-Emissionen durch den Verzicht auf energieintensive Wärmebehandlungen.

Darüber hinaus weist das Pulver verbesserte Materialeigenschaften, insbesondere bei der oben genannten Verwendung, wie beispielsweise hohe Druckfestigkeit durch gleichmäßige Lastverteilung einer Struktur und hervorragende Wärmedämmung durch isolierende Blasen, geringe Wasseraufnahme für wasserdichte Materialien, auf.

Vorteilhafterweise wird das Recycling von Baustoffen gefördert, dadurch, dass Luftblasenzementelemente zerkleinert und als Pulver aufbereitet werden, um in neuen Produkten verwendet zu werden.

Gemäß einer Ausführungsform weist das Pulver eine Dichte von 0,3g/cm3 auf.

Zement als Ausgangsmaterial weist in etwa eine Dichte von 2,5 g/cm3 auf. Das Pulver weist eine Dichte von etwa 0,35 g/cm3, insbesondere 0,2 g/cm3 bis 0,5 g/cm3, auf. Insbesondere bezieht sich die Dichte des Pulvers auf eine Schüttdichte.

Ein weiterer Aspekt betrifft ein Verfahren zur Herstellung eines Pulver gemäß einem der vorherigen Ausführungsbeispiele, wobei das Verfahren einen Schritt eines Bereitstellens eines ersten Ausgangsstoffes und einen Schritt eines Vermischens des ersten Ausgangsstoffes mit einem Treibmittel zu einer Mischung aufweist. Weiter weist das Verfahren die Schritte eines Aufschäumens der Mischung zu einem Schaum, wobei der Schaum Blasen umschließt, eines Trocknens des Schaums und eines Zermahlens des getrockneten Schaums zu dem Pulver, wobei die Partikel des Pulvers eine vorgegebene Korngröße aufweisen, auf.

Mit anderen Worten betrifft das Verfahren zur Herstellung eines Pulvers ein Herstellungsverfahren für ein unbeschriebenes Pulver, welches insbesondere Teil des Gemisches zur Herstellung eines Blocksteins ist. In einem Schritt wird ein erster Ausgangsstoff bereitgestellt. Beispielsweise ist der erste Ausgangsstoff Zement, Gips oder Kalk, insbesondere Zementpulver, welches als Ausgangsmaterial vorliegt. Beispielsweise ist der erste Ausgangsstoff eine Mischung aus verschiedenen Stoffen, wie beispielsweise Zement und Gips oder Zement Gips und Kalk. Insbesondere ist der Ausgangsstoff so ausgebildet, dass dieser bei Kontakt mit Wasser mit dem Wasser reagiert. Vorzugsweise erfolgt ein Prozess der Hybridisierung bei Kontakt mit Wasser. Hierdurch löst sich der erste Ausgangsstoff im Wasser bzw. bildet eine gelartige Masse. Durch Vermischen des ersten Ausgangsstoffes mit dem Treibmittel zu einer Mischung erfolgt ein Aufschäumen der Mischung. Beispielsweise kann vorgesehen sein, dass zusammen mit dem Wasser das Treibmittel in den ersten Ausgangsstoff eingebracht wird. Vorzugsweise ist jedoch vorgesehen, dass der Ausgangsstoff zunächst mit Wasser vermischt wird und anschließend durch ein Treibmittel aufgeschraubt wird. Das Treibmittel kann beispielsweise ein chemisches Betäubungsmittel sein. Vorteilhafterweise ist das Treibmittel Aluminiumpulver. Dies hat den Vorteil, dass Aluminiumpulver nicht mit dem ersten Ausgangsstoff, insbesondere Zement, reagiert. Dadurch weist die aufgeschäumte Mischung nach einem Schritt des Trocknens des Schaums eine besonders hohe Festigkeit auf. Chemisches Betäubungsmittel kann dahingegen die Festigkeit des Schaums negativ beeinflussen. Die aufgeschäumte Mischung weist eine Vielzahl von Blasen auf. Insbesondere weisen die Blasen unterschiedliche Größen auf. Beispielsweise können die Blasen größer als die Partikel des Pulvers bzw. die Partikel des ersten Ausgangsstoffes sein. Durch eine ungleichmäßige Größenverteilung weist der Schaum eine im Vergleich zum Blockstein geringere Festigkeit auf. Insbesondere weist der Schaum durch die ungleichmäßige Größenverteilung eine geringere Festigkeit als ein Schaum mit gleichmäßiger Größenverteilung auf. Um die Größenverteilung der Blasen einstellen zu können, ist das Zermahlen des getrockneten Schaums zu dem Pulver vorgesehen. Basierend auf der zu erzielenden Korngröße, also basierend auf dem Zermahlen, kann die Dichte des Pulvers eingestellt werden.

Gemäß einer Ausführungsform umfasst der Schritt des Zermahlens ein Einstellen eines Verhältnisses von einer Festigkeit zu einer Dichte der Partikel in Abhängigkeit von der Korngröße.

Unter der Festigkeit kann insbesondere die Festigkeit eines aus diesem Pulver hergestellten Blocksteins verstanden werden. Jedoch kann auch die Festigkeit eines einzelnen Partikels bestimmt werden. Insbesondere ist aber das Verhältnis von der Festigkeit zu der Dichte interessant. Weist das Pulver bei dem gleichen Ausgangsstoff eine geringere Dichte auf, weisen die Partikel mehr Blasen auf. Einerseits kann dies erreicht werden dadurch, dass ein Partikel mehrere Blasen aufweist oder das mehrere Partikel jeweils eine Blase aufweisen. Durch eine solche Reduktion der Dichte folgt eine Reduktion der Festigkeit. Vorzugsweise liegt die Dichte des Pulvers unterhalb einer Dichte des Ausgangsstoffes, weist jedoch eine Festigkeit oberhalb der Festigkeit des Ausgangsstoffes auf. Insbesondere ist die Festigkeit abhängig von der Korngröße bzw. der Korngrößenverteilung der Partikel, da durch eine geringere Korngröße oder eine geringere Größenverteilung vorzugsweise auch die Blasen der Partikel kleiner sind. Folglich weisen Partikel mit einer größeren Korngröße größere Blasen auf.

Mit anderen Worten kann durch die Korngröße eingestellt werden, wie viel Material insbesondere Volumen des Ausgangsstoffes erforderlich sind, um eine gewisse Menge Pulver zu erhalten. Aus dieser gewissen Menge Pulver kann wiederum ein Blockstein gefertigt werden, welcher eine gewisse Festigkeit aufweist. Basierend auf der zu erzielenden Festigkeit des Blocksteins kann der Blockstein bei geringerer Festigkeit ein geringeres Gewicht aufweisen. Andersherum kann der Blockstein bei einer hohen Festigkeit ein höheres Gewicht aufweisen. Jedoch ist die Festigkeit des unter anderem aus dem Pulver hergestellten Blocksteins im Vergleich zu einem aus dem Ausgangsstoff hergestellten Blocksteins höher.

Gemäß einer weiteren Ausführungsform beinhaltet das Treibmittel Aluminiumpulver.

Die Verwendung von Aluminiumpulver als Treibmittel, insbesondere zum Aufschäumen der Mischung hat den Vorteil gegenüber chemischen Schäumungsmitteln, dass die Festigkeit des Schaums nicht negativ beeinflusst wird.

In einer weiteren Ausführungsform kann die Korngröße eine Korngrößenverteilung, insbesondere mit einer Korngrößenverteilung von mindestens 20 µm, insbesondere mindestens 30 µm, vorzugsweise mindestens 40 µm und/oder höchstens 70 µm, insbesondere höchsten 60 µm, vorzugsweise höchsten 50 µm, aufweisen.

Wie bereits weiter oben beschrieben, betrifft die Korngröße eine Korngrößenverteilung. Insbesondere sind die Eigenschaften des Blocksteins, welche aus einem entsprechend gewonnenen Pulver hergestellt wird, durch die Korngröße, insbesondere die Korngrößenverteilung, beeinflussbar.

In einer weiteren Ausführungsform weist das Pulver eine geringere Dichte als der Ausgangsstoff auf.

Dies hat den Vorteil, dass durch das erfindungsgemäße Verfahren die Dichte des Ausgangsstoffes reduziert werden kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

Die Erfindung wird anhand der beigefügten Figur beispielhaft näher erläutert. Es zeigt:
- Figur 1: eine schematische Darstellung eines Blocksteins;
- Figur 2: eine schematische Darstellung eines Querschnitts des Partikels des Pulvers;
- Figur 3: ein Flussdiagramm mit Schritten zur Durchführung des Anspruchs.

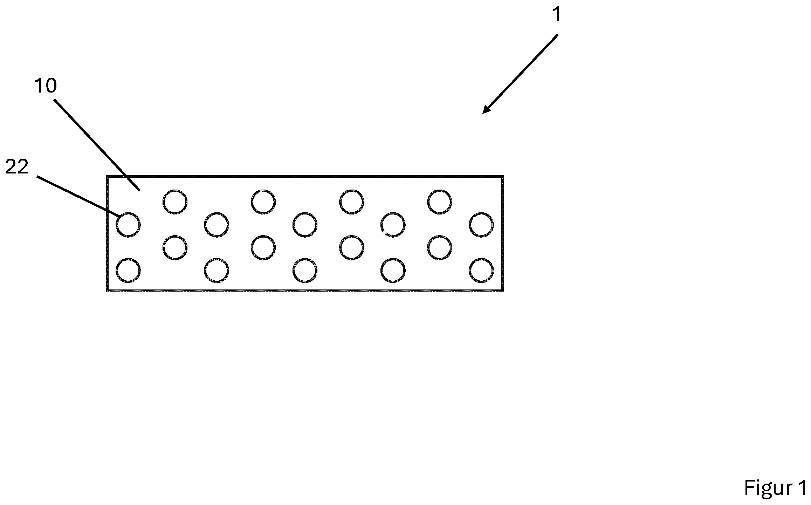

Figur 1 zeigt eine schematische Darstellung eines Blocksteins 1.

Der Blockstein 1 ist aus einem Gemisch 10 hergestellt. Das Gemisch 10 weist ein Pulver bestehend aus Partikel 20, welche hier nicht gezeigt sind, und einem ersten Stoff auf. Zumindest einige Partikel 20 weisen zumindest eine Blase 22 auf. Vorzugsweise weist jeder Partikel 20 genau eine Blase auf. Insbesondere sind die Partikel 20 in dem Blockstein 1 gleichmäßig verteilt. Dies bedeutet insbesondere, dass die Blasen den gleichen, insbesondere im Wesentlichen den gleichen, Abstand haben. Beispielsweise kann der Abstand den Durchmesser eines einzelnen, 2,3, 4,5 oder 6 Partikel 20 entsprechen.

Wie in Figur 1 gezeigt weisen die Partikel 20 vorzugsweise Blasen mit gleicher Größe auf. Insbesondere haben die Blasen in etwa die gleichen Größen. Dies kann bedeuten, dass die Größe der Blasen um das Volumen einer durchschnittlichen Blase variiert.

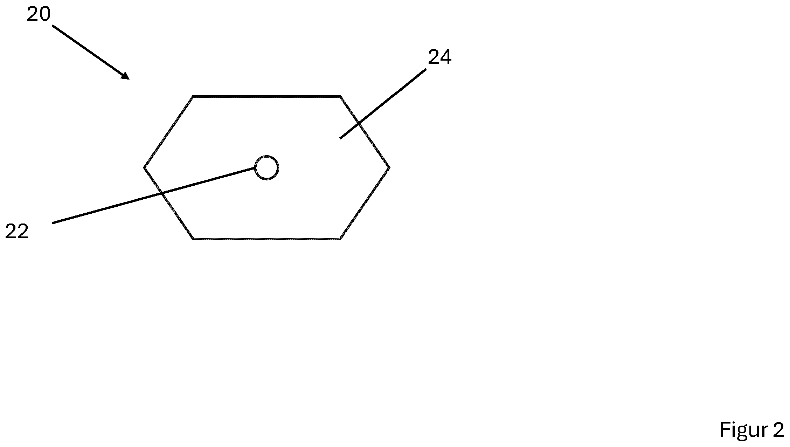

Figur 2 zeigt eine schematische Darstellung eines Querschnitts des Partikels 20 des Pulvers.

Die gezeigte Form des Partikel 20 ist exemplarisch. Der Partikel 20 kann eine beliebige Form aufweisen. Beispielsweise kann der Partikel 20 rund, quarterförmig, kristallförmig oder ähnliches sein. Der Partikel 20 ist aus einem zweiten Material 24. Insbesondere umschließt das zweite Material 24, also der Partikel 20, die Blase 22. Dies hat den Vorteil, dass der Partikel keine Flüssigkeiten in die Blase, insbesondere den Hohlraum, aufnimmt. Beispielsweise könnte auch vorgesehen sein, dass die Blase 24 nicht durch den Partikel 20 umschlossen wird.

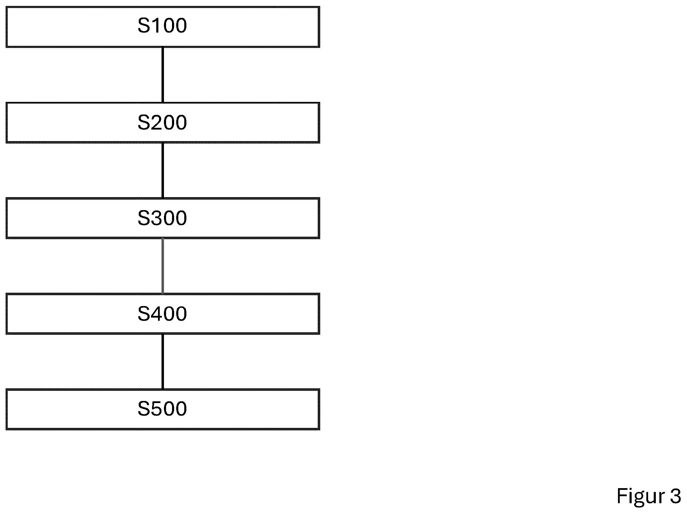

Figur 3 zeigt ein Flussdiagramm mit Schritten zur Durchführung des Anspruchs gemäß dem Verfahren.

In einem Schritt S100 erfolgt das Bereitstellen eines Ausgangsstoffes.

In einem darauffolgenden Schritt S200 erfolgt das Vermischen des ersten Ausgangsstoffes mit einem Treibmittel zu einer Mischung.

In einem weiteren Schritt S300 erfolgt ein Aufschäumen der Mischung zu einem Schaum, wobei dieser Schaumblasen umschließt. Eine Zementmischung, die der Ausgangsstoff ist, wird durch physikalische Zugabe eines Schäumungsmittels (Foam Agent) oder durch chemische Prozesse, wie die Reaktion von Aluminium und Kalk in Wasser, aufgeschäumt. Dabei expandiert der Zement um das 4- bis 6-Fache seines ursprünglichen Volumens. Beispielsweise führt dieser Schritt zu großen Blasen, welche für eine Leichtigkeit des Schaums sorgen, jedoch weist der Schaum strukturelle Schwächen auf. Die Blasen verleihen dem Schaum Stabilität und prägen die mechanischen sowie thermischen Eigenschaften.

In einem Schritt S400 erfolgt das Trocknen des Schaums. Vorzugsweise erfolgt das Trocknen über mehrere Tage. Der aufgeschäumte Zement wird mehrere Tage unter normalen Umgebungsbedingungen ausgehärtet. Während der Aushärtung stabilisieren sich die Luftblasen in der Zementstruktur. Große Blasen verbleiben als Schwachstellen im Schaum, die in einem weiteren Prozessschritt, nämlich dem Zermahlen, eliminiert werden, während die kleinen Blasen stabil bleiben und die späteren Eigenschaften des Pulvers prägen.

In einem nächsten Schritt S500 erfolgt das Zermahlen des getrockneten Schaums zu dem Pulver, wobei die Partikel des Pulvers eine vorgegebene Korngröße aufweisen.

Der ausgehärtete Schaum wird mechanisch zerkleinert, beispielsweise durch Brecher oder Kugelmühlen, sodass große Blasen zerstört werden, wodurch das Material homogener und kompakter wird. Kleinere Blasen, im Mikrometerbereich, bleiben stabil erhalten und sind ausschlaggebend für die besonderen Eigenschaften des Pulvers. Trotz der Zerkleinerung behält das Pulver durch die Blasenstruktur ein hohes Volumen. Das Pulver erreicht ein Volumen, das 3- bis 5-mal größer ist als das ursprüngliche Volumen des verwendeten Ausgangsstoffes.

Durch die Steuerung der Korngrößte des Pulvers ist dessen Volumen und Struktur gezielt auf verschiedene Anwendungsbereiche abstimmbar. Diese Anpassungsfähigkeit macht das Pulver zu einem universellen Füllstoff für unterschiedliche Branchen und Einsatzmöglichkeiten. Die Optimierung der Korngröße und Pulverstruktur erfolgt durch Variation eines Zerkleinerungsprozesses und der Verarbeitungstechniken.

Exemplarisch kann die Volumenänderung durch das Herstellungsverfahren anhand des folgenden mathematischen Modells beschrieben werden:

### Ausgangszustand des Zements

Der ursprüngliche Zement hat ein Volumen V_{_initial} und eine Dichte ρ_{_Zement}. Für die Berechnung nehmen wir als Beispiel:
Masse des Zements: m_{_Zement} = 100 g
Dichte des Zements: ρ_{_Zement} = 2,5 g/cm³ ${V}_{_initial} = {m_}_{Zement} / {ρ}_{_Zement} = 100 g / 2 , 5 g / {cm}^{3} = 40 {cm}^{3}$

### Aufschäumung und Volumenvergrößerung

Während der Aufschäumung expandiert der Zement durch die Einführung von Blasen. Die Expansion führt zu einem neuen Volumen V_{_expanded}, das ein Vielfaches des ursprünglichen Volumens beträgt: ${V_}_{expanded} = α ⋅ {V_}_{initial}$

Die Volumenvergrößerung wird beispielsweise für einen Expansionsfaktor α = 6 berechnet und ergibt sich wie folgt: ${V_}_{expanded} = 6 ⋅ 40 {cm}^{3} = 240 {cm}^{3}$

### Zerkleinerung und Volumenänderung

Während der mechanischen Zerkleinerung wird das Material in feines Pulver umgewandelt. Die großen Luftblasen (d_{_groß}) werden zerstört, aber die Mikroblasen (d_{_mikro}) bleiben stabil. Nach der Zerkleinerung hat das Pulver ein neues Volumen V_{_final}: ${V_}_{final} = β ⋅ {V_}_{initial}$

Für eine Volumenänderungsfaktor β = 3 ergibt sich: ${V_}_{final} = 3 ⋅ 40 {cm}^{3} = 120 {cm}^{3}$

### Blasenverteilung

Die Blasen in den Partikeln des Pulvers haben einen typischen Durchmesser d_{_mikro}. Die Anzahl der Mikroblasen (N_{_Blasen}) lässt sich approximativ berechnen:
Dabei ist V_{_Luft} das Volumen der insgesamt eingeschlossenen Luft und V_{_Blase} das Volumen einer einzelnen Blase: ${N_}_{Blasen} = {V_}_{Luft} / {V_}_{Blase}$

### Volumen einer Blase:

${V_}_{Blase} = 4 / 3 ⋅ π ⋅ {\left({d_}_{mikro}/2\right)}^{3}$

Unter der Vorgabe, dass der Durchmesser eines Partikels d_{_mikro} = 20 µm beträgt ergibt sich ein Volumen der Blase zu: ${V_}_{Blase} = 4 , 19 ⋅ {10}^{- 15} {cm}^{3}$ ${N_}_{Blasen} \approx 120 {cm}^{3} / 4 , 19 ⋅ {10}^{- 15} {cm}^{3} \approx 2 , 86 ⋅ {10}^{13} Blasen$

Die Erfindung betrifft ein Verfahren zur Herstellung eines mikroblasigen Pulvers aus Bio-Zement oder recyceltem Zement, das als nachhaltiger und vielseitig einsetzbarer Füllstoff dient. Das Pulver stellt eine umweltfreundliche Alternative zu herkömmlichen Kunststoff- und Polymerfüllstoffen dar, die durch ihre Herstellung und Verwendung erhebliche Umweltbelastungen verursachen.

Das Verfahren umfasst die Aufschäumung von Zementmischungen, wodurch große und kleine Luftblasen in der Zementstruktur entstehen. Nach der Aushärtung wird das Material mechanisch zerkleinert, wobei die großen, instabilen Blasen entfernt werden und nur die stabilen, mikroskopischen Blasen erhalten bleiben. Dies führt zu einem Pulver mit außergewöhnlichen Eigenschaften wie hoher Druckfestigkeit, geringem Gewicht, hervorragender Wärmedämmung und reduzierter Wasseraufnahme.

Das mikroblasige Pulver wird ohne energieintensive Wärmebehandlung hergestellt, wodurch der CO₂-Ausstoß signifikant reduziert wird. Zudem basiert die Produktion auf der Wiederverwertung von Zementmaterialien, wodurch Bauabfälle minimiert und natürliche Ressourcen geschont werden. Das Pulver kann für eine Vielzahl von Anwendungen genutzt werden, darunter leichte Betonprodukte, thermische und akustische Isolierungen, Verpackungsmaterialien und Fahrzeugkomponenten. Es eignet sich auch als Ersatz für Holz in Bau- und Möbelanwendungen, was die Abholzung reduziert und somit einen weiteren Beitrag zum Umweltschutz leistet.

Darüber hinaus trägt die Erfindung zur Reduzierung von Umweltbelastungen im häuslichen Bereich bei, indem sie energieeffiziente Baumaterialien mit verbesserten Wärmedämmeigenschaften bereitstellt, die den Energieverbrauch für Heizung und Kühlung senken. Durch den Ersatz schädlicher Kunststofffüllstoffe und die Förderung nachhaltiger Produktionsweisen bietet die Erfindung einen entscheidenden Fortschritt für eine umweltfreundlichere Zukunft.

### Bezugszeichenliste

- 1: Blockstein
- 10: Gemisch
- 20: Partikel
- 22: Blase
- 24: erster Ausgangsstoff

## Patentansprüche

1. Verfahren zur Herstellung eines Blocksteins (1) aus einem Gemisch (10), wobei das Gemisch (10) einen ersten Stoff aus einem ersten Material und ein Pulver aus einem zweiten Material aufweist, **dadurch gekennzeichnet, dass** das Pulver wenigstens einen Partikel (20) aufweist, der eine Blase (22) umschließt.

2. Verfahren zur Herstellung eines Blocksteins (1) gemäß Anspruch 1, **dadurch gekennzeichnet, dass** das erste Material und/oder das zweite Material Calcium aufweisen.

3. Verfahren zur Herstellung eines Blocksteins (1) gemäß Anspruch 1 oder 2, **dadurch gekennzeichnet, dass** das erste Material und/oder das zweite Material Zement oder Gips ist.

4. Verfahren zur Herstellung eines Blocksteins (1) gemäß einem der vorherigen, **dadurch gekennzeichnet, dass** das erste Material dem zweiten Material entspricht.

5. Verfahren zur Herstellung eines Blocksteins (1) gemäß einem der Ansprüche 1 bis 3, **dadurch gekennzeichnet, dass** das erste Material von dem zweiten Material verschieden ist.

6. Verfahren gemäß einem der vorherigen Ansprüche, **dadurch gekennzeichnet, dass** das Gemisch (10) eine Dichte aufweist, die geringer als eine Dichte des ersten Stoffes ist.

7. Verfahren gemäß einem der vorherigen Ansprüche, **dadurch gekennzeichnet, dass** mehrere Partikel (20), insbesondere eine Mehrheit der Partikel (20), jeweils eine Blase (22) umschließen.

8. Verfahren gemäß Anspruch 7, **dadurch gekennzeichnet, dass** die Blasen (22) homogen im Blockstein (1) verteilt sind.

9. Pulver für ein Verfahren zur Herstellung eines Blocksteins (1) gemäß einem der vorherigen Ansprüche, **dadurch gekennzeichnet, dass** die Partikel (20) eine Korngröße von mindestens 20 µm, insbesondere mindestens 30 µm, vorzugsweise mindestens 40 µm und/oder höchstens 70 µm, insbesondere höchsten 60 µm, vorzugsweise höchsten 50 µm aufweisen.

10. Pulver gemäß Anspruch 9, **dadurch gekennzeichnet, dass** das Pulver eine Dichte von 0,3g/cm3 aufweist.

11. Verfahren zur Herstellung eines Pulver gemäß Anspruch 9 oder 10, wobei das Verfahren die folgenden Schritte aufweist:
a. Bereitstellen eines ersten Ausgangsstoffes
b. Vermischen des ersten Ausgangsstoffes mit einem Treibmittel zu einer Mischung
c. Aufschäumen der Mischung zu einem Schaum, wobei der Schaum Blasen (22) umschließt;
d. Trocknen des Schaums; und
e. Zermahlen des getrockneten Schaums zu dem Pulver, wobei die Partikel (20) des Pulvers eine vorgegebene Korngröße aufweisen.

12. Verfahren gemäß Anspruch 11, wobei der Schritt des Zermahlens ein Einstellen eines Verhältnisses von einer Festigkeit zu einer Dichte der Partikel (20) in Abhängigkeit von der Korngröße umfasst.

13. Verfahren gemäß Anspruch 11 oder 12, wobei das Treibmittel Aluminiumpulver beinhaltet.

14. Verfahren gemäß einem der Ansprüche 11 bis 13, wobei die Korngröße eine Korngrößenverteilung ist, insbesondere mit einer Korngrößenverteilung von mindestens 20 µm, insbesondere mindestens 30 µm, vorzugsweise mindestens 40 µm und/oder höchstens 70 µm, insbesondere höchsten 60 µm, vorzugsweise höchsten 50 µm aufweisen.

15. Verfahren gemäß einem der Ansprüche 11 bis 14, wobei das Pulver eine geringere Dichte als der Ausgangsstoff aufweist.
